# EUROPEAN PATENT APPLICATION

(11) **EP 1 503 184 A2**
(43) Date of publication of application: **02.02.2005**
(21) Application number: 04017872.5
(22) Date of filing: 28.07.2004
(51) Int. Cl.: G01D 5/244

(54) **Fault detection circuit**

(30) Priority: 29.07.2003 JP 2003202785
(71) Applicant: ALPS ELECTRIC CO., LTD., Tokyo 145-8501 (JP)
(72) Inventor: Hasegawa, Kazuo, Ota-ku Tokyo 145-8501 (JP); Tokunaga, Ichiro, Ota-ku Tokyo 145-8501 (JP)
(74) Representative: Klunker . Schmitt-Nilson . Hirsch

(57) **Abstract**

The present invention provides a fault detecting circuit capable of preventing a rotation angle detecting sensor from outputting erroneous angle information and of detecting a failure with high precision. Comparing means (a window comparator) 17C compares an addition signal Vs1 obtained by adding a signal +sinθ to a signal -sinθ with an addition signal Vs2 obtained by adding a signal +cosθ to a signal -cosθ, the signals being output from a sensor unit 10. When the addition signal Vs1 and the addition signal Vs2 both exceed the upper limit threshold voltage V_{TH} or not exceed the lower limit threshold voltage V_{TL}, a fault signal is output from a fault detecting unit 17 to a control unit 18. Therefore, it is possible to prevent the rotation angle detecting sensor from outputting erroneous angle information.

## Description

### BACKGROUND OF THE INVENTION

### 1. Field of the Invention

The present invention relates to a fault detecting circuit for a rotating angle detecting sensor that detects a rotation angle of a steering wheel in an electromotive power steering device, and more specifically, to a fault detecting circuit capable of reliably performing fault detection.

### 2. Description of the Related Art

An electromotive power steering device of an automobile is operated by the assist torque (the steering assist torque) generated by an assist motor. The exact amount of assist torque must be generated, and thus a rotation angle detecting sensor is required for detecting the rotation angle of the steering device with high precision.

As for the rotation angle detecting sensor for detecting the rotation angle of a rotating shaft of the steering device with high precision, a technique has been suggested in which giant magnetoresistance effect elements (GMR elements) are used (see Patent Document 1).

### [Patent Document 1]

Japanese Unexamined Patent Application Publication No. 2003-121197

### [Patent Document 2]

Japanese Unexamined Patent Application Publication No. 2001-215117

However, when a drift or offset voltage is generated in the signal output from the rotation angle detecting sensor, the rotation angle detecting sensor may output erroneous angle information, that is, a signal indicating 90 degrees although an actual rotation angle in steering is, for example, 30 degrees. This has a large effect on driver's steering operation. In addition, when the assist torque is excessively generated, the steering device gets out of control, thereby causing an accident.

Further, when the offset voltage generated due to the lapse of time is gradually added to the signal output from the rotation angle detecting sensor, a difference in the steering power in the right and left directions is generated although it is insufficient to stop the assist, causing the driver to feel uncomfortable or a physical disorder. As a result, erroneous steering operation can occur.

### SUMMARY OF THE INVENTION

Accordingly, the present invention is designed to solve the above problems, and it is an object of the present invention to provide a fault detecting circuit for a rotation angle detecting sensor capable of preventing the rotation angle detecting sensor from outputting erroneous angle information due to a failure.

In order to achieve the above objects, the present invention provides a fault detecting circuit comprising: a bridge circuit having elements whose impedances are varied with a change in an external environment; and a fault detecting unit for receiving a signal output from a midpoint of a first circuit of the bridge circuit and a signal output from a midpoint of a second circuit of the bridge circuit, and for outputting a fault signal when the signals exceed a predetermined range, wherein the fault detecting unit comprises: adding means for adding the signal output from the midpoint of the first circuit to the signal output from the midpoint of the second circuit; reference voltage generating means for generating a predetermined reference voltage; and comparing means for comparing the added signal with the reference voltage and for outputting the fault signal based on the comparison result.

For example, the signal output from the midpoint of the first circuit of the bridge circuit and the signal output from the midpoint of the second circuit of the bridge circuit are sine-wave signals or cosine-wave signals, and their phases are different from each other by 180 degrees.

Furthermore, the bridge circuit comprises a first bridge circuit and a second bridge circuit. When a signal output from a midpoint of a first circuit of the first bridge circuit is a sine-wave signal, a signal output from a midpoint of a first circuit of the second bridge circuit leads the sine-wave signal by 90 degrees in phase, and a signal output from a midpoint of a second circuit of the second bridge circuit lags the sine-wave signal by 90 degrees in phase.

Further, the comparing means preferably has a lower limit threshold voltage less than the reference voltage and an upper limit threshold voltage more than the reference voltage.

Moreover, the adding means comprises a first adding circuit for adding the signal +sinθ output from the midpoint of the first circuit of the first bridge circuit to the signal -sinθ output from the midpoint of the second circuit of the first bridge circuit, and a second adding circuit for adding the signal -cosθ output from the midpoint of the first circuit of the second bridge circuit to the signal +cosθ output from the midpoint of the second circuit of the second bridge circuit. The comparing means outputs the fault signal when the output of the first adding circuit or the output of the second adding circuit exceeds the upper limit threshold voltage and/or not exceed the lower limit threshold voltage.

In addition, the adding means adds the signal +sinθ output from the midpoint of the first circuit of the first bridge circuit, the signal -sinθ output from the midpoint of the second circuit of the first bridge circuit, the signal -cosθ output from the midpoint of the first circuit of the second bridge circuit, and the signal +cosθ output from the midpoint of the second circuit of the second bridge circuit. The comparing means outputs the fault signal when the added signal exceeds the upper limit threshold voltage and/or not exceed the lower limit threshold voltage.

Further, the fault detecting unit is provided with a differential circuit for outputting a difference signal between the output of the first adding circuit and the output of the second adding circuit, and the comparing means outputs the fault signal when the difference signal exceeds the upper limit threshold voltage and/or not exceed the lower limit threshold voltage.

Furthermore, the differential circuit is driven using a midpoint voltage generated by the reference voltage generating means, as a reference voltage.

For example, the impedance converting elements are formed of magnetoresistance effect films.

### BRIEF DESCRIPTION OF THE DRAWINGS

Fig. 1 is a cross-sectional view illustrating the inner structure of a rotation angle detecting sensor of the present invention;
Fig. 2 is a plan view of the rotation angle detecting sensor taken along the line II-II of Fig. 1;
Fig. 3 is a block diagram illustrating the structure of the rotation angle detecting sensor;
Fig. 4 is a connection diagram of bridge circuits using magnetoresistance effect films, which constitute a sensor unit;
Fig. 5 is a circuit diagram of a fault detecting circuit according to a first embodiment of the present invention;
Fig. 6A is a view illustrating the relationship between a rotation angle and the output of the sensor unit in a normal operational state, and Fig. 6B is a view illustrating the relationship between the rotation angle and the output of an adding circuit in the normal operational state;
Fig. 7A is a view illustrating the relationship between the rotation angle and the output of the sensor unit in a state in which an offset voltage is generated, and Fig. 7B is a view illustrating the relationship between the rotation angle and the output of the adding circuit in the same state;
Fig. 8 is a circuit diagram of a fault detecting circuit according to a second embodiment of the present invention; and
Fig. 9 is a circuit diagram of a fault detecting circuit according to a third embodiment of the present invention.

### DESCRIPTION OF THE PREFERRED EMBODIMENTS

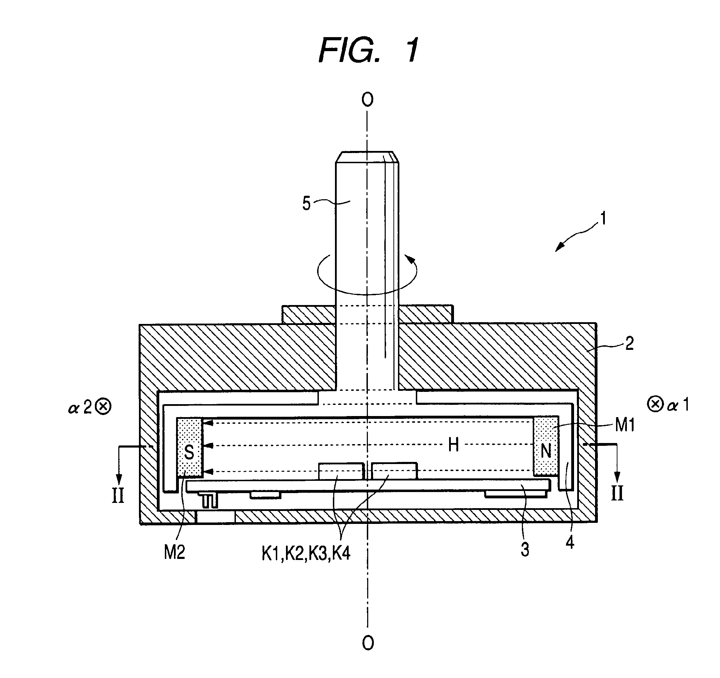

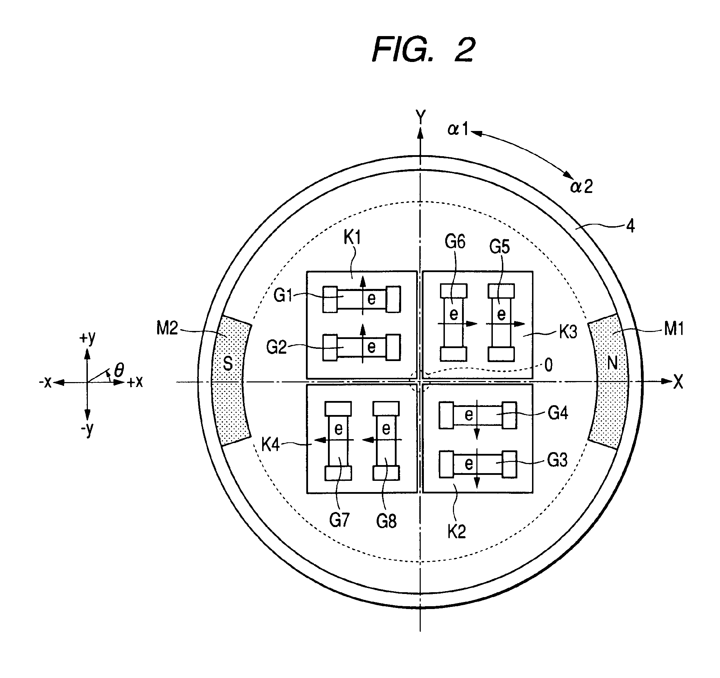

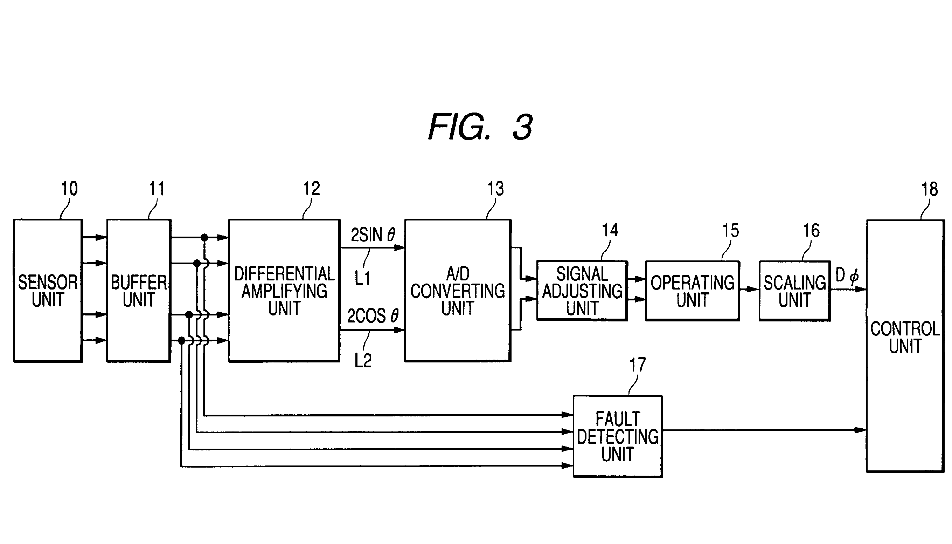

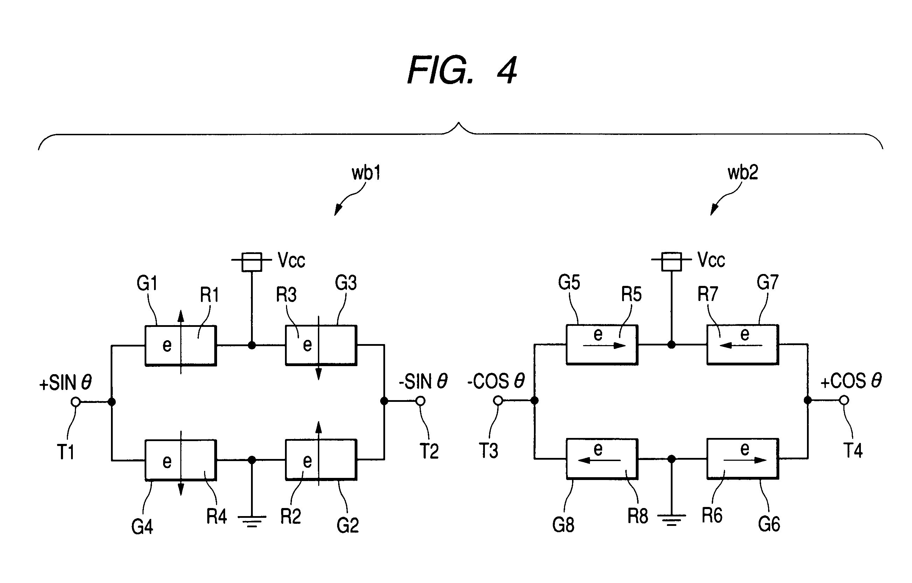

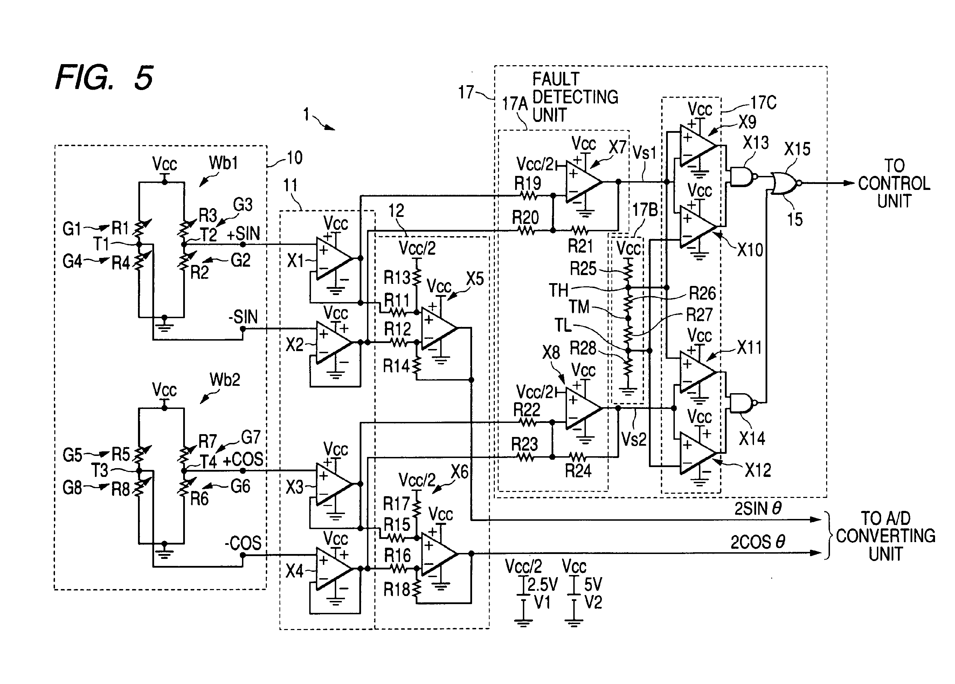

Fig. 1 is a cross-sectional view illustrating the inner structure of a rotation angle detecting sensor. Fig. 2 is a plan view illustrating the inner structure of the rotation angle detecting sensor taken along the line A-A of Fig. 1. Fig. 3 is a block diagram illustrating the structure of the rotation angle detecting sensor. Fig. 4 is a connection diagram illustrating Wheatstone bridge circuits using magnetoresistance effect films, which constitute a sensor unit. Fig. 5 is a circuit diagram illustrating the structure of a fault detecting circuit according to a first embodiment of the present invention.

A rotation angle detecting sensor 1 shown in Fig. 1 detects information on the rotation angle of an automobile's steering wheel.

The rotation angle detecting sensor 1 comprises a case 2, a flat supporting member (a fixing part) 3 that is made of a non-magnetic material and is fixed to the case 2, and a cup-shaped rotating member 4 located on the upper side of the supporting member 3. A rotating shaft 5 extends in the external direction of the case 2 (in the Z1 direction of Fig. 1) along the central axis O-O, and its one end is fixed to the center of the rotating member 4, so that the rotating member 4 is supported so as to freely rotate on the rotating shaft 5. In addition, the output from a rotating body, such as a steering wheel, that is, the rotation of the rotating body is transmitted to the rotating shaft 5 through a decelerating mechanism (not shown).

Magnets M1 and M2 made of a ferrite are fixed to the inner wall of the rotating member 4. The surfaces of the magnets M1 and M2 opposite to each other are polarized to the N and S poles, respectively, and the direction in which the N pole is connected to the S pole is a diametric direction. In Fig. 1, a magnetic field H from the magnet M1 of the N pole to the magnet M2 of the S pole is indicated by a dotted line, and the direction of the magnetic field H can be changed with the rotation of the rotating member 4.

For example, four substrates K1, K2, K3, and K4 shown in Fig. 2 are provided around the central axis O-O on the supporting member 3, and two magnetoresistance effect elements G1 to G8 are provided on each substrate. That is, two magnetoresistance effect elements G1 and G2 are provided on the substrate K1, two magnetoresistance effect elements G3 and G4 are provided on the substrate K2, two magnetoresistance effect elements G5 and G6 are provided on the substrate K3, and two magnetoresistance effect elements G7 and G8 are provided on the substrate K4. The substrate K1 and the substrate K2 are symmetric with respect to the central axis O-O, and the substrate K3 and the substrate K4 are symmetric with respect to the central axis O-O. In addition, the arrows on the magnetoresistance effect elements G1 to G8 indicate the magnetization direction e of fixed magnetic layers (not shown) that form the magnetoresistance effect elements.

The substrates K1, K2, K3, and K4 are provided on the inner side of the magnets M1 and M2 of the rotating member 4. When the magnets M1 and M2 rotate around the substrates K1, K2, K3, and K4 with the rotation of the rotating member 4, the magnetization direction of a free magnetic layer (not shown) forming each of magnetoresistance effect elements G1 to G8 changes according to the direction of the magnetic field H between the magnets M1 and M2 being rotated.

The resistance values R1 to R8 out of the impedance components of the magnetoresistance effect elements G1 to G8 decrease when the magnetization direction of the free magnetic layer coincides with the magnetization direction e of the fixed magnetic layer. Meanwhile, the resistance values R1 to R8 increase when the magnetization direction of the free magnetic layer is opposite to the magnetization direction e of the fixed magnetic layer. Therefore, when a rotation angle is θ, a sinθ function or a cosθ function in which θ is a variable can be obtained.

Fig. 3 is a block diagram illustrating the circuit structure of the rotation angle detecting sensor, and Fig. 4 is a connection diagram illustrating Wheatstone bridge circuits using magnetoresistance effect elements, which constitute the rotation angle detecting sensor.

The magnetoresistance effect elements G1 to G8 of the rotation angle detecting sensor 1 are connected, for example, as shown in Fig. 4, thereby forming two Wheatstone bridge circuits Wb1 and Wb2 (hereinafter, referred to as 'bridge circuits'). That is, a first bridge circuit Wb1 is formed such that a first circuit having the magnetoresistance effect elements G1 (a resistor R1) and G4 (a resistor R4) that are connected to each other in series is connected in parallel to a second circuit having the magnetoresistance effect elements G2 (a resistor R2) and G3 (a resistor R3) that are connected to each other in series. Similarly, a second bridge circuit Wb2 is formed such that a first circuit having the magnetoresistance effect elements G5 (a resistor R5) and G8 (a resistor R8) that are connected to each other in series is connected in parallel to a second circuit having the magnetoresistance effect elements G6 (a resistor R6) and G7 (a resistor R7) that are connected to each other in series.

As shown in Fig. 4, in the first and second circuits of the first bridge circuit Wb1, one end of the magnetoresistance effect element G1 (the resistor R1) and one end of the magnetoresistance effect element G3 (the resistor R3) are connected to a power source Vcc, and one end of the magnetoresistance effect element G4 (the resistor R4) and one end of the magnetoresistance effect element G2 (the resistor R2) are connected to the ground. Similarly, in the first and second circuits of the second bridge circuit Wb2, one end of the magnetoresistance effect element G5 (the resistor R5) and one end of the magnetoresistance effect element G7 (the resistor R7) are connected to the power source Vcc, and one end of the magnetoresistance effect element G8 (the resistor R8) and one end of the magnetoresistance effect element G6 (the resistor R6) are connected to the ground.

Furthermore, a connection point at which the other ends of the magnetoresistance effect elements G1 and G4 are directly connected to each other and a connection point at which the other ends of the magnetoresistance effect elements G3 and G2 are directly connected to each other are the midpoints of the first and second circuits of the first bridge circuit Wb1, respectively, and the midpoints are connected to terminals T1 and T2, respectively. Similarly, a connection point at which the other ends of the magnetoresistance effect elements G5 and G8 are directly connected to each other and a connection point at which the other ends of the magnetoresistance effect elements G7 and G6 are directly connected to each other are the midpoints of the third and fourth circuits of the second bridge circuit Wb2, respectively, and the midpoints are connected to terminals T3 and T4, respectively.

In this state, when the rotating shaft 5 of the rotation angle detecting sensor 1 rotates in the direction of α1 (the counterclockwise direction) or α2 (the clockwise direction) as shown in Figs. 1 and 2, sine-wave signals or cosine-wave signals are output from the terminals T1, T2, T3, and T4, which are connected to the midpoints.

When a function for the signal output from the terminal T1 is prescribed as +sinθ, the signal output from the terminal T2 is a signal -sinθ whose phase is different from that of the signal +sinθ by 180 degrees, and the signal output from the terminal T3 is a signal -cosθ whose phase leads that of the signal +sinθ by 90 degrees. In addition, the signal output from the terminal T4 is a signal +cosθ whose phase lags that of the signal +sinθ by 90 degrees.

As shown in Fig. 3, the circuit structure of the rotation angle detecting sensor comprises a sensor unit having the first and second bridge circuits Wb1 and Wb2, a buffer unit 11, a differential amplifying unit 12, an A/D converting unit 13, a signal adjusting unit 14, an operating unit 15, a scaling unit 16, a fault detecting unit 17, and a control unit 18.

The structure of the buffer unit 11, differential amplifying unit 12, and fault detecting unit 17 will be described later. The respective signals +sinθ, -sinθ, -cosθ, and +cosθ output from the sensor unit 10 are transmitted to the differential amplifying unit 12 via the butter unit 11. The differential amplifying unit 12 differentially amplifies the signal +sinθ and the signal -sinθ to generate a signal 2sinθ, and also differentially amplifies the signal -cosθ and the signal +cosθ to generate a signal 2cosθ. Then, the signals 2sinθ and 2cosθ are transmitted to the A/D converting unit 13 that is provided to the next stage of the differential amplifying unit 12, and then the A/D converting unit 13 converts the signals into digital signals. The signal adjusting unit 14 performs processes, such as an offset adjustment and a gain adjustment, on the digitized signals 2sinθ and 2cosθ, and then outputs the signals to the operating unit 15 that is provided to the next stage thereof. Subsequently, the operating unit 15 calculates the rotation angle θ of the rotating shaft 5, which is composed of the signal 2sinθ and the signal 2cosθ, and also detects an absolute rotation angle φ of the rotating body (for example, the steering wheel). Then, the scaling unit 16 performs a scaling process on a data signal indicating the absolute rotation angle of the rotating body and outputs the processed signal to the control unit 18.

The control unit 18 synthetically determines the optimum amount of current, based on the data signal indicating the absolute rotation angle and other data signals (for example, data relating to the speed of an automobile and data relating to a steering angle), and then applies the amount of current to an assist motor. In this way, electromotive power steering operation can be comfortably performed.

Meanwhile, the signals +sinθ, -sinθ, -cosθ, and +cosθ output from the buffer unit 11 are transmitted to the fault detecting unit 17. When the fault detecting unit 17 detects a fault in the sensor unit 10 using means, which will be describe later, it notifies the control unit 18 of the generation of the fault by outputting a fault signal to the control unit 18.

As shown in Fig. 5, the buffer unit 11 comprises four buffer circuits X1, X2, X3, and X4, each comprising an operational amplifier, and the signals +sinθ, -sinθ, -cosθ, and +cosθ output from the terminals T1, T2, T3, and T4 of the first and second bridge circuits Wb1 and Wb2 are input to noninverting input terminals of the respective buffer circuits X1, X2, X3, and X4.

The differential amplifying unit 12 comprises two differential circuits X5 and X6, each comprising one operational amplifier and four resistors R11 to R14 or R15 to R18. The signal +sinθ output from the buffer circuit X1 is input to a noninverting input terminal of the differential circuit X5 via the resistor R11. A midpoint voltage Vcc/2, which is half a power source voltage Vcc, is also applied to the noninverting input terminal via the resistor R13. In addition, the signal -sinθ output from the buffer circuit X2 is input to an inverting input terminal of the differential circuit X5 via the resistor R12. Further, the inverting input terminal of the differential circuit X5 is connected to an output terminal thereof through the resistor R14.

Similarly, the signal +cosθ output from the buffer circuit X3 is input to a noninverting input terminal of the differential circuit X6 via the resistor R15. The midpoint voltage Vcc/2, which is a half power source voltage Vcc, is also applied to the noninverting input terminal via the resistor R17. In addition, the signal -cosθ output from the buffer circuit X4 is input to an inverting input terminal of the differential circuit X6 via the resistor R16. Further, the inverting input terminal of the differential circuit X6 is connected to an output terminal thereof through the resistor R18. The outputs of the differential circuits X5 and X6 are transmitted to the A/D converting unit 13.

As shown in Fig. 5, the fault detecting unit 17 comprises adding means 17A, reference voltage generating means 17B, comparing means (a window comparator) 17C, and logic circuits.

The adding means 17A comprises two adding circuits X7 and X8, each comprising one operational amplifier and three resistors R19 to R21 or R22 to R24. The signals +sinθ and -sinθ output from the buffer circuits X1 and X2 are input to an inverting input terminal of the adding circuit (the first adding circuit) X7 via the resistors R19 and R20. The inverting input terminal of the adding circuit X7 is connected to an output terminal thereof through the resistor R21. In addition, the midpoint voltage Vcc/2, which is a half power source voltage Vcc, is applied to a noninverting input terminal of the adding circuit X7. The adding circuit (the second adding circuit) X8 is similar in structure to the adding circuit X7. The signals +cosθ and -cosθ output from the buffer circuits X3 and X4 are input to an inverting input terminal of the adding circuit X8 via the resistors R22 and R23. The inverting input terminal of the adding circuit X8 is connected to an output terminal thereof through the resistor R24. In addition, the midpoint voltage Vcc/2, which is a half power source voltage Vcc, is applied to a noninverting input terminal of the adding circuit X8.

The adding circuit X7 adds the signal +sinθ to the signal -sinθ to output an addition signal Vs1. When the absolute values of the amplitudes of the signals +sinθ and -sinθ are ideally equal to each other and R19 is equal to R20, the output of the adding circuit X7 is always the midpoint voltage Vcc/2 (= Vs1) (see Fig. 5). Similarly, the adding circuit X8 adds the signal +cosθ to the signal -cosθ to output an addition signal Vs2. When the absolute values of the amplitudes of the signals +cosθ and -cosθ are ideally equal to each other and R22 is equal to R23, the output of the adding circuit X8 is always the midpoint voltage Vcc/2 (= Vs2).

The reference voltage generating means 17B comprises resistors R25, R26, R27, and R28 that are connected to each other in series, and the relationships of R25 = R28 and R26 = R27 are established. The upper limit threshold voltage V_{TH} is applied to a connection point TH between the resistor R25 and the resistor R26, and the lower limit threshold voltage V_{TL} is applied to a connection point TL between the resistor R27 and the resistor R28.

The comparing means 17C comprises four comparing circuits X9, X10, X11, and X12, each comprising one operational amplifier. The comparing circuits X9 and X10 monitor the bridge circuit Wb1, and the comparing circuits X11 and X12 monitor the bridge circuit Wb2.

The output of the adding circuit X7 is input to an inverting input terminal of the comparing circuit X9 and a noninverting input terminal of the comparing circuit X10, respectively. The upper limit threshold voltage V_{TH} is applied to a noninverting input terminal of the comparing circuit X9, and the lower limit threshold voltage V_{TL} is applied to an inverting input terminal of the comparing circuit X10. Similarly, the output of the adding circuit X8 is input to an inverting input terminal of the comparing circuit X11 and a noninverting input terminal of the comparing circuit X12, respectively. The upper limit threshold voltage V_{TH} is applied to a noninverting input terminal of the comparing circuit X11, and the lower limit threshold voltage V_{TL} is applied to an inverting input terminal of the comparing circuit X12.

Further, the output of the comparing circuit X9 and the output of the comparing circuit X10 are input to a NAND gate X13, and the output of the comparing circuit X11 and the output of the comparing circuit X12 are input to a NAND gate X14. The outputs of the NAND gates X13 and X14 are input to the control unit 18 via a NOR gate X15.

Furthermore, analog operation is described in the present embodiment, but an A/D conversion and digital operation may be used.

The operation of the fault detecting unit will now be described.

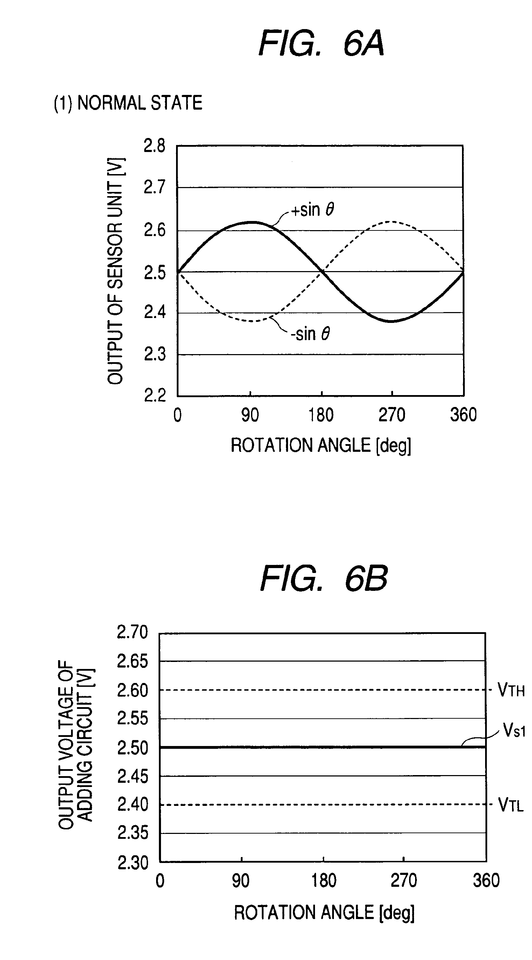

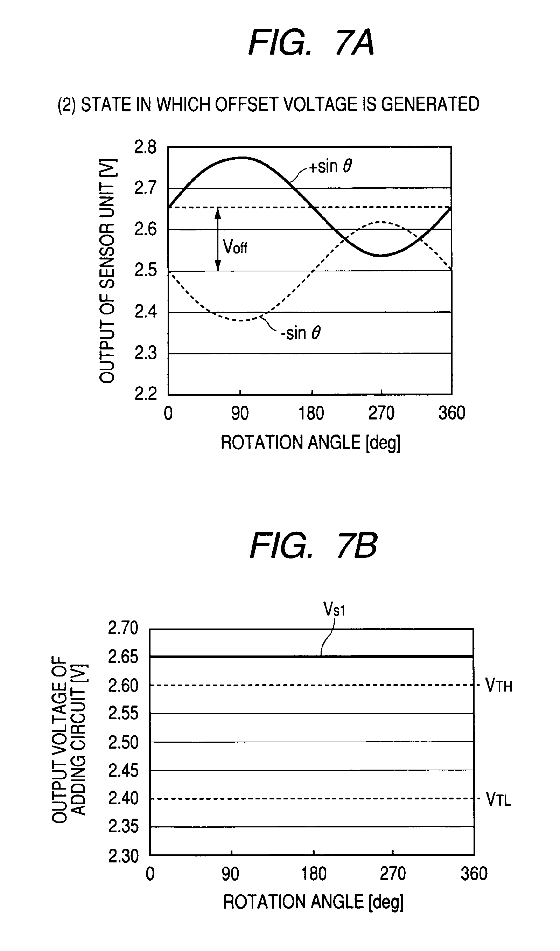

Fig. 6A illustrates the relationship between the rotation angle and the output of the sensor unit in a normal operational state, and Fig. 6B illustrates the relationship between the rotation angle and the output of the adding circuit in the same state. Fig. 7A illustrates the relationship between the rotation angle and the output of the sensor unit in a state in which an offset voltage is generated, and Fig. 7B illustrates the relationship between the rotation angle and the output of the adding circuit in the same state.

### (1) Normal operation

When the first and second bridge circuits Wb1 and Wb2 are operated in the normal state, the signals +sinθ and -sinθ output from the respective midpoints (terminals T1 and T2) of the first and second circuits of the first bridge circuit Wb1 are different from each other by 180 degrees in phase, but are equal to each other in the absolute value of amplitude, as shown in Figs. 6A and 6B. Therefore, the addition signal Vs1, which is the output of the adding circuit X7, is maintained at the midpoint voltage Vcc/2 (Vs1 = Vcc/2).

In this case, since the addition signal Vs1 (= Vcc/2) has an intermediate voltage between the upper limit threshold voltage V_{TH} and the lower limit threshold voltage V_{TL} as shown in Fig. 6B, the outputs of the comparing circuits X9 and X10 are maintained at an H level, and thus the output of the NAND gate X13 is maintained at an L level.

Similarly, in the second bridge circuit Wb2 outputting the signals +cosθ and -cosθ, the addition signal Vs2, which is the output of the adding circuit X8, is maintained at the midpoint voltage Vcc/2 (Vs2 = Vcc/2). Therefore, the outputs of the comparing circuits X11 and X12 are maintained at the H level, and thus the output of the NAND gate X14 is maintained at the L level.

Since the L-level signals output from the NAND gates X13 and X14 are input to a NOR gate X15, the NOR gate X15 outputs an H-level signal, which indicates a normal state, to the control unit 18.

### (2) In the case in which an offset voltage is generated

It is suggested that one of the magnetoresistance effect elements G1 to G8 constituting the first and second bridge circuits Wb1 and Wb2, for example, the magnetoresistance effect element G1, is out of order with the lapse of time or due to any cause, and thus an offset voltage V_{off} as shown in Fig. 7A is generated in only the signal +sinθ output from the midpoint (the terminal T1) of the first circuit of the first bridge circuit Wb1.

In this case, since the signal -sinθ output from the midpoint (the terminal T2) of the second circuit of the first bridge circuit Wb1 is in the normal state, the output of the adding circuit X7 is a signal in which the offset voltage V_{off} overlaps with the midpoint voltage Vcc/2. Therefore, the addition signal Vs1, which is the output of the adding means X7, becomes Vcc/2 + V_{off}.

When the comparing circuit X9 determines that the addition signal Vs1 (= Vcc/2 + V_{off}) exceeds the upper limit threshold voltage V_{TH} or not exceed the lower limit threshold voltage V_{TL}, the output of either the comparing circuit X9 or the comparing circuit X10 is inverted into an L level, as shown in Fig 7B. Therefore, an H-level signal is output from the NAND gate X13, and thus an L-level signal, which indicates a fault signal, is output from the NOR gate X15 to the control unit 18. Then, the control unit 18 recognizes that the sensor unit 10 is out of order by receiving the fault signal, and thus can perform an appropriate process, for example, a process in which erroneous angle information detected from the rotation angle detecting sensor cannot be output to an external apparatus.

In that case, when both the magnetoresistance effect element G1 and the magnetoresistance effect element G6 constituting the second bridge circuit Wb2 are out of order and then an offset voltage V_{off} having the same magnitude as that of the signal -sinθ is generated, the addition signal Vs1 output from the adding circuit X7 becomes the midpoint voltage Vcc/2, which indicates a normal state. Therefore, it is impossible to detect the failure of the sensor unit 10. However, there is not much possibility that the offset voltages having the same magnitudes as those of the signal +sinθ and the signal -sinθ will be generated such that their polarities are opposite to each other. Even when the generated offset voltages have an opposite polarity to each other, it is possible to reliably detect the failure of the sensor unit 10 by narrowing the range (the magnitude of the window of a window comparator) between the upper limit threshold voltage V_{TH} and the lower limit threshold voltage V_{TL} if the offset voltages have different magnitudes from each other.

In addition, when the second bridge circuit Wb2 is out of order, the same effect as that described above can be obtained.

When one of the magnetoresistance effect elements G1 to G8, for example, only the resistor R1 of the magnetoresistance effect element G1 in the first circuit (which comprises the magnetoresistance effect circuit G1 and the magnetoresistance effect circuit G4 that are connected to each other in series) of the first bridge circuit Wb1 is out of order with the lapse of time or due to any cause, the voltage dividing ratio between the resistor R1 and the resistor R4 changes, resulting in variation in the amplitude of the signal +sinθ in addition to a variation in the offset voltage. However, the variation of amplitude is negligible since it is much less than the variation of the offset voltage. Therefore, it is possible to detect the variation of resistance values of the magnetoresistance effect elements G1 to G8 by monitoring only the variation of the offset voltage.

Furthermore, only if the resistor R1 and the resistor R4 vary in a completely tracked state in the above-mentioned example, only the amplitude varies, without the variation of the offset voltage. Therefore, this situation cannot occur in fault modes. Consequently, it is not very necessary to monitor only the variation of amplitude.

As described above, according to the fault detecting circuit, when a failure occurs in which the offset voltage overlaps with the output of the bridge circuit, it is possible for the fault detecting circuit to instantly detect the failure and then to transmit it to the control unit. Therefore, it is possible to prevent the rotation angle detecting sensor from outputting erroneous angle information.

When the rotation angle detecting sensor is used for detecting the steering angle of an electromotive power steering device, it is possible to prevent the irregular rotation of the steering device caused by an excessive amount of assist transmitted from the control unit to the assist motor. Therefore, it is possible to improve the stability of an automobile.

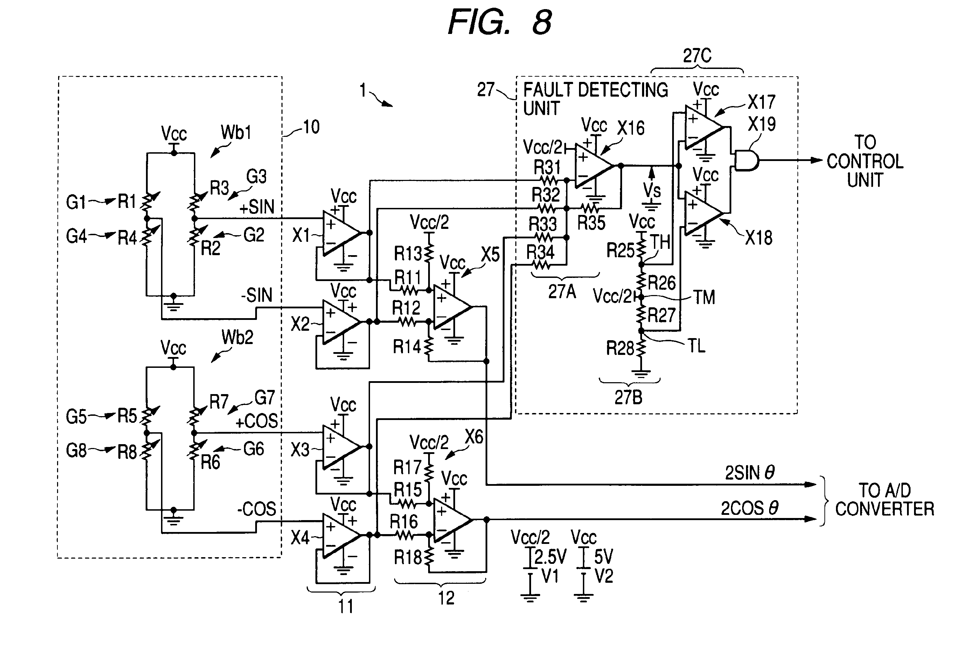

Fig. 8 is a circuit diagram illustrating the structure of a fault detecting circuit according to a second embodiment of the present invention.

The rotation angle detecting sensor shown in Fig. 8 is different from the rotation angle detecting sensor shown in Fig. 5 in the structure of the fault detecting unit 27. Therefore, the fault detecting unit will be mainly described below.

In the fault detecting unit 27, the outputs of the buffer circuits X1, X2, X3, and X4 constituting the buffer unit 11 are added by the adding circuit X16 constituting adding means 27A. Subsequently, the output of the adding circuit X16 is input to a pair of comparing circuits X17 and X18 constituting comparing means (a window comparator) 27C, respectively. In addition, the outputs of the comparing circuits X17 and X18 are input to the control unit 18 via an AND gate X19. Reference voltage generating means 27B comprising the resistors R25, R26, R27, and R28 has the same structure as that described in the first embodiment. That is, the resistors R25, R26, R27, and R28 are connected to each other in series, and the relationships of R25 = R28 and R26 = R27 are established. The upper limit threshold voltage V_{TH} is applied to a connection point TH between the resistor R25 and the resistor R26, and the lower limit threshold voltage V_{TL} is applied to a connection point TL between the resistor R27 and the resistor R28.

The adding circuit X16 synthetically adds the signals +sinθ, -sinθ, +cosθ, and -cosθ. Similar to that shown in Fig. 6B, an addition signal Vs output from the adding circuit X16 is set to the midpoint voltage Vcc/2 since the signal +sinθ and the signal -sinθ cancel out each other and the signal +cosθ and the signal -cosθ cancel out each other in the normal state. Therefore, since the addition signal Vs is located between the upper limit threshold voltage V_{TH} and the lower limit threshold voltage V_{TL} of the comparing circuits X17 and X18, the outputs of the comparing circuits X17 and X18 are H levels, and thus an H-level signal, which indicates the normal signal, is output from the control unit 18.

Similar to the first embodiment, since the failure of the bridge circuit can be instantly detected and transmitted to the control unit, it is possible to prevent the rotation angle detecting sensor from outputting erroneous angle information.

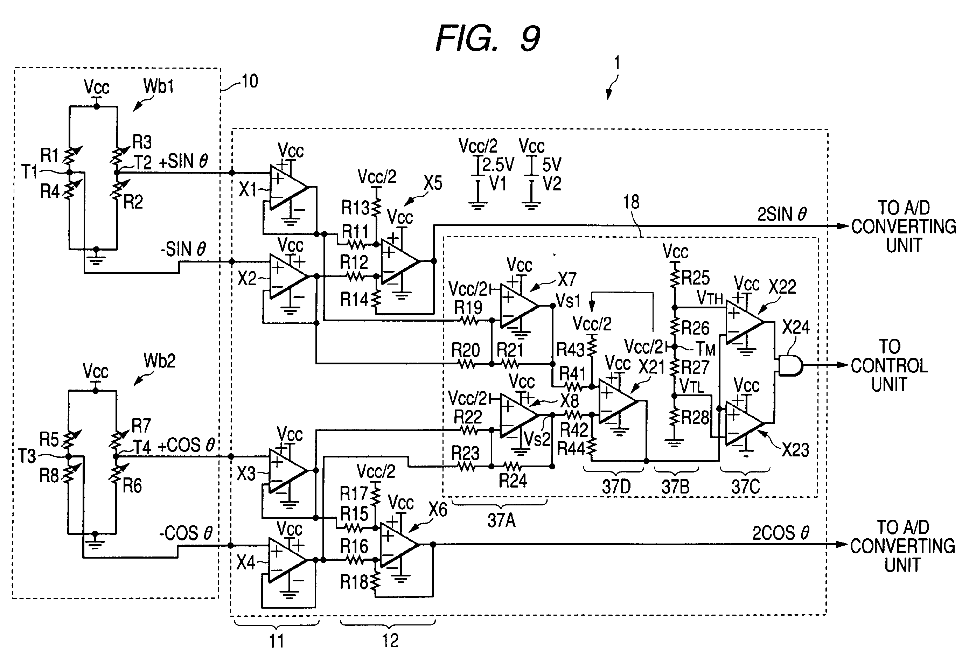

Fig. 9 is a circuit diagram illustrating the structure of a fault detecting circuit according to a third embodiment of the present invention.

A rotation angle detecting sensor according to the third embodiment is different from that of the first embodiment in the structure of a fault detecting unit 37. Therefore, the fault detecting unit 37 will be mainly described below.

The fault detecting unit 37 according to the third embodiment comprises adding means 37A, reference voltage generating means 37B, comparing means (a window comparator) 37C, and differential means 37D.

The adding means 37A, the reference voltage generating means 37B, and the comparing means 37C are the same as those described in the first embodiment. However, a differential circuit X21 constituting the differential means 37D is provided between the adding means 37A and the comparing means 37C, and the outputs of adding circuits X7 and X8 constituting the adding means 37A are input to the noninverting input terminal and the inverting input terminal of the differential circuit X21 via resistors X41 and X42, respectively. A connection point TM between a resistor R26 and a resistor R27 that constitute the reference voltage generating means 37B is connected to the noninverting input terminal of the differential circuit X21 through a resistor R43. The power source voltage Vcc drops down by half at the connection point TM due to the relationships of R25 = R28 and R26 = R27, and thus the voltage of the connection point TM is the midpoint voltage Vcc/2. The midpoint voltage Vcc/2 generated by the reference voltage generating means 37B is applied to the noninverting input terminal of the differential circuit X21 via a resistor R43.

In addition, the outputs of the comparing circuits X22 and X23 that constitute the comparing means 37C are input to the control unit 18 via a NAND gate X24.

The adding circuit X7 adds the signal +sinθ to the signal -sinθ that are output from the first bridge circuit Wb1. Therefore, when the signal +sinθ and the signal -sin θ are an ideal relationship, that is, when the signals have the same amplitude and are not affected by the offset voltage, the addition signal Vs1 (= +sinθ + (sinθ)) from the adding circuit X7 is the midpoint voltage Vcc/2 (Vs1 = Vcc/2). Similarly, when the signal +cosθ and the signal -cosθ output from the second bridge circuit Wb2 have an ideal relationship, the addition signal Vs2 (= +cosθ + (-cosθ)) from the adding circuit X8 is also the midpoint voltage Vcc/2 (Vs2 = Vcc/2). Since Vs1 is equal to Vs2, the difference signal, which is the output of the differential circuit X21, becomes the midpoint voltage Vcc/2, which is the reference of the comparing means 37C, and thus has an exactly intermediate voltage level between the upper limit threshold voltage V_{TH} and the lower limit threshold voltage V_{TL}. Therefore, H-level signals are output from the comparing circuits X22 and X23, respectively, and thus an L level signal, which indicates the normal state, is output from the NAND gate X24 to the control unit 18.

Meanwhile, when the offset voltage is varied in at least one of the signals +sinθ, -sinθ, +cosθ, and -cosθ, the addition signal Vs1 is not equal to the addition signal Vs2, and thus the output of the differential circuit X21 differs from the midpoint voltage Vcc/2. When the output of the differential circuit X21 exceeds the upper limit threshold voltage V_{TH} and/or not exceed the lower limit threshold voltage V_{TL}, a fault signal is transmitted from the NAND gate X24 to the control unit 18.

However, in the rotation angle detecting sensor, the sensor unit 10 and the fault detecting circuit are formed by different processes and are driven by different power sources, or impedances of the magnetoresistance effect elements G1 to G8 are varied even if the sensor unit 10 and the fault detecting circuit are driven by the same power source. Therefore, it is difficult to make the average potential of the respective terminals T1 to T8 of the sensor unit 10 coincide with the midpoint voltage Vcc/2 of the fault detecting circuit.

For this reason, in the first to third embodiments, when the mid point voltage Vcc/2 applied to the noninverting input terminal of the differential circuit X21 is different from the reference voltage for operating the fault detecting circuit, that is, the midpoint voltage Vcc/2, which is the reference for the operation of the upper limit threshold voltage V_{TH} and the lower limit threshold voltage V_{TL} of the comparing means 37C, the signals output from the respective circuits contain large error components. Therefore, the comparing means 37C cannot perform an accurate comparison, thereby reducing the precision of the fault detecting circuit.

However, in the fault detecting circuit according to the third embodiment, by applying the midpoint voltage Vcc/2 generated by the reference voltage generating means 37B to the noninverting input terminal of the differential circuit X21, the reference voltage for operating the differential circuit X21 is set to the midpoint voltage Vcc/2 generated by the reference voltage generating means 37B.

In addition, by applying the upper limit threshold voltage V_{TH} and the lower limit threshold voltage V_{TL} generated by the reference voltage generating means 37B to the noninverting input terminals of the comparing circuits X22 and X23, the midpoint voltage Vcc/2 is equal to the voltage to be the reference of the upper limit threshold voltage V_{TH} and the lower limit threshold voltage V_{TL}·

In other words, since the reference voltage for the operation of the differential circuit X21 and the reference voltage for the operation of the comparing means 37C can be set to the midpoint voltage Vcc/2 generated by the same power source (the reference voltage generating means 37B), the comparing means 37C can perform an accurate comparison, thereby improving the precision of the fault detecting circuit.

Similar to the above, it is preferable to apply the voltage generated at the connection point TM between the resistor R26 and the resistor R27 of the reference voltage generating means 37B to the noninverting input terminals of the adding circuits X7 and X8 as the midpoint voltage Vcc/2. In this case, similar to the differential circuit X21 and the comparing means 37C, the adding circuits X7 and X8 are operated using the midpoint voltage Vcc/2 as the reference voltage. Therefore, it is possible to improve the precision of the fault detecting circuit.

In the above-mentioned embodiments, since a single-polarity power source method using the power source voltage +Vcc is adopted, the midpoint voltage Vcc/2 is applied as the reference voltage for operating the respective circuits. However, the present invention is not limited thereto, and a bipolar power source method can be adopted. In this case, the reference voltage for operating the respective circuits may be 0V or an arbitrary voltage other than 0V.

Further, according to the present invention, the magnetoresistance effect elements are used to form the bridge circuits of the sensor unit. However, the present invention is not limited thereto, and magnetic impedance elements may be used to form the bridge circuits of the sensor unit.

As described above, the present invention can provide a fault detecting circuit capable of preventing a rotation angle detecting sensor from outputting erroneous angle information.

Furthermore, the present invention can provide a fault detecting circuit capable of detecting a failure with high precision.

## Claims

1. A fault detecting circuit comprising:
a bridge circuit having elements whose impedances are varied with a change in an external environment; and
a fault detecting unit for receiving a signal output from a midpoint of a first circuit of the bridge circuit and a signal output from a midpoint of a second circuit of the bridge circuit, and for outputting a fault signal when the signals exceed a predetermined range,
wherein the fault detecting unit comprises:
adding means for adding the signal output from the midpoint of the first circuit to the signal output from the midpoint of the second circuit;
reference voltage generating means for generating a predetermined reference voltage; and
comparing means for comparing the added signal with the reference voltage and for outputting the fault signal based on the comparison result.

2. The fault detecting circuit according to claim 1,
wherein the signal output from the midpoint of the first circuit of the bridge circuit and the signal output from the midpoint of the second circuit of the bridge circuit are sine-wave signals or cosine-wave signals, and their phases are different from each other by 180 degrees.

3. The fault detecting circuit according to claim 1 or 2,
wherein the bridge circuit comprises a first bridge circuit and a second bridge circuit, and
wherein, when a signal output from a midpoint of a first circuit of the first bridge circuit is a sine-wave signal, a signal output from a midpoint of a first circuit of the second bridge circuit leads the sine-wave signal by 90 degrees in phase, and a signal output from a midpoint of a second circuit of the second bridge circuit lags the sine-wave signal by 90 degrees in phase.

4. The fault detecting circuit according to any of claims 1-3,
wherein the comparing means has a lower limit threshold voltage less than the reference voltage and an upper limit threshold voltage more than the reference voltage.

5. The fault detecting circuit according to any of claims 1-4,
wherein the adding means comprises a first adding circuit for adding the signal +sinθ output from the midpoint of the first circuit of the first bridge circuit to the signal -sinθ output from the midpoint of the second circuit of the first bridge circuit, and a second adding circuit for adding the signal -cosθ output from the midpoint of the first circuit of the second bridge circuit to the signal +cosθ output from the midpoint of the second circuit of the second bridge circuit, and
wherein the comparing means outputs the fault signal when the output of the first adding circuit or the output of the second adding circuit exceeds the upper limit threshold voltage and/or not exceed the lower limit threshold voltage.

6. The fault detecting circuit according to any of claims 3-5,
wherein the adding means adds the signal +sinθ output from the midpoint of the first circuit of the first bridge circuit, the signal -sinθ output from the midpoint of the second circuit of the first bridge circuit, the signal -cosθ output from the midpoint of the first circuit of the second bridge circuit, and the signal +cosθ output from the midpoint of the second circuit of the second bridge circuit, and
wherein the comparing means outputs the fault signal when the added signal exceeds the upper limit threshold voltage and/or not exceed the lower limit threshold voltage.

7. The fault detecting circuit according to claim 5 or 6,
wherein the fault detecting unit is provided with a differential circuit for outputting a difference signal between the output of the first adding circuit and the output of the second adding circuit, and
wherein the comparing means output the fault signal when the difference signal exceeds the upper limit threshold voltage and/or not exceed the lower limit threshold voltage.

8. The fault detecting circuit according to claim 7,
wherein the differential circuit is driven using a midpoint voltage generated by the reference voltage generating means, as a reference voltage.

9. The fault detecting circuit according to any of claims 1-8,
wherein the impedance converting elements are formed of magnetoresistance effect films.
